# EUROPEAN PATENT APPLICATION

(11) **EP 4 389 808 A1**
(43) Date of publication of application: **26.06.2024**
(21) Application number: 23177329.2
(22) Date of filing: 05.06.2023
(51) Int. Cl.: C08J 11/02, B01D 11/02, B29B 17/02, C08J 11/08

(54) **METHOD FOR RECYCLING POLYVINYL CHLORIDE PRODUCTS**

(30) Priority: 22.12.2022 US 202263434739 P; 11.05.2023 US 202363501409 P
(71) Applicant: Unilin, BV, 8710 Wielsbeke (BE)
(72) Inventor: JONGBLOET, Alana, 8710 Wielsbeke (BE); LEDEGEN, Sam, 8710 Wielsbeke (BE); DOUCHY, Benoît, 8710 Wielsbeke (BE); VAN VLASSENRODE, Kristof, 8710 Wielsbeke (BE); CHRISTIAENS, Quinten, 8710 Wielsbeke (BE)
(74) Representative: Unilin Technologies

(57) **Abstract**

Method for recycling polyvinyl chloride (PVC) products, preferably polyvinyl chloride (PVC) floor or wall coverings, wherein said method comprises the step of subjecting said polyvinyl chloride (PVC) products to a solvent-based extraction.

## Description

The present invention relates to recycling polyvinyl chloride (PVC) products. In particular, the invention relates to recycling polyvinyl chloride products such that the polyvinyl chloride polymer obtained from these products may be used for the production of new polyvinyl chloride products. More in particular, these polyvinyl chloride products may relate to floor or wall coverings.

Although polyvinyl chloride is a thermoplastic polymer, recycling of polyvinyl chloride products is often conceived as being difficult or problematic. This is mainly due to the additives and/or contaminants that PVC products may contain. It is particularly common for most polyvinyl chloride products, especially those which are made from soft PVC, to contain plasticizers. In the state of the art, a class of plasticizers which has been abundantly used are phthalates and their derivatives. Recently however, phthalates have been associated with public health related issues, and in particular with regard to the emission of volatile organic compounds (VOCs). Furthermore, polyvinyl chloride products may contain, among other, fillers (for example calcium carbonate), dyes and/or heavy metals, which may contribute to making recycling of these polyvinyl chloride products even more difficult. As the composition of polyvinyl chloride products strongly depends on their specific application, recycling polyvinyl chloride products at their end-of-life stage may be particularly complex.

The prime object of the present invention is to provide a method for recycling polyvinyl chloride products, with various preferred embodiments offering a solution for the problems associated with the recycling methods of the state of the art. In particular, the invention aims to provide a better and more widely applicable method for recycling polyvinyl chloride products, wherein the recycled polymer may be used to produce new products from polyvinyl chloride.

To this aim, a first independent aspect of the present invention is a method for recycling polyvinyl chloride (PVC) products, preferably polyvinyl chloride (PVC) floor or wall coverings, wherein said method comprises the step of subjecting said polyvinyl chloride (PVC) products to a solvent-based extraction.

In light of the invention, the term "solvent-based extraction" need to be interpreted as the separation of one or more components from a mixture by dissolving said one or more components in a suitable solvent. More in particular, one or more soluble components may be separated from one or more insoluble components in a mixture.

The method of the invention, according to its first aspect, allows to efficiently recycle polyvinyl chloride products by the removal of unwanted components thereof, which components could be disadvantageous or harmful. As such, a clean PVC polymer stream may be obtained using the method of the invention.

By preference, said solvent-based extraction comprises extracting at least one component from the polyvinyl chloride (PVC) products, said component is chosen from the group of plasticizers, heavy metals, polar components, acrylic resins, organic components, pigments, additives, or combinations thereof.

According to some embodiments, said component is a plasticizer. In light of the invention, the term "plasticizer" need to be interpreted as a substance which may be added to a material, in particular a synthetic material, with the goal of making said material softer, more flexible, to increase its plasticity, to decrease its viscosity, and/or to improve handling of said material during a manufacturing process, e.g. by decreasing friction of the material in a manufacturing line. More in particular, a distinction may be made between phthalate based plasticizers and non-phthalate based plasticizers. On one hand, phthalate based plasticizers are to be interpreted as plasticizers having a chemical structure in accordance with formula I, wherein R and R' may be the same or may be different, and wherein R and/or R' are chosen from the group of CₙH₂ₙ₊₁, wherein n is an integer between 1 and 15, while non-phthalate based plasticizers have a chemical structure which is not in accordance with formula I.

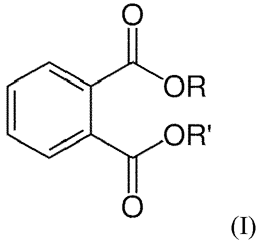

Extracting plasticizers upon recycling PVC products according to the method of the invention is particularly advantageous as the resulting clean PVC polymer stream may be used more efficiently for manufacturing new PVC products. More in particular, in making said new PVC products, a specific target amount of plasticizer may be easier controlled when starting from a substantially plasticizer-free PVC polymer stream.

According to some embodiments, said plasticizer is a phthalate based plasticizer in accordance with formula I. It is noted that especially those phthalate based plasticizers having a high molecular weight, such as plasticizers having a chemical structure in accordance with formula I wherein n is 5 or more, may be of high relevance in light of potential VOC emissions and the related public health concerns. More by preference, said phthalate based plasticizer is chosen from the group of diisononyl phthalate (DINP), di-(2-ethylhexyl) phthalate (DEHP), dibutyl phthalate (DBP), diisoheptyl phthalate (DIHP), di-n-octyl phthalate (DOP), diisooctyl phthalate (DIOP), diisodecyl phthalate (DIDP), or combinations thereof. The method for recycling PVC products according to the invention is particularly interesting as it allows to efficiently extract hazardous phthalate based plasticizers from the PVC products, such that new PVC products may be safely manufactured based upon the resulting clean PVC polymer stream. Furthermore, upon making new PVC products from the clean PVC polymer stream, one may specifically target the use of non-hazardous plasticizers.

According to a further or another embodiment, said component may be a non-phthalate based plasticizer not in accordance with formula I. More by preference, said non-phthalate based plasticizer is chosen from the group of benzoate esters, adipate esters, citrate esters, cyclohexanoate esters, or combinations thereof. Extraction of non-hazardous, non-phthalate based plasticizers from the PVC products allows to obtain a clean PVC polymer stream which can be more efficiently used in making new PVC products, thereby accurately controlling the composition during manufacturing of said new products.

According to some embodiments, said component may comprise a mixture of one or more phthalate based plasticizers and one or more non-phthalate plasticizers.

According to some embodiments, said component may be a heavy metal. By preference, said heavy metal is chosen from the group of antimony (Sb), arsenic (As), bismuth (Bi), cadmium (Cd), cerium (Ce), chromium (Cr), cobalt (Co), copper (Cu), gallium (Ga), gold (Au), iron (Fe), lead (Pb), manganese (Mn), mercury (Hg), nickel (Ni), platinum (Pt), silver (Ag), tellurium (Te), thallium (Tl), tin (Sn), uranium (U), vanadium (V), and zinc (Zn), or combinations thereof. More by preference, said heavy metal may be chosen from the group of copper (Cu), iron (Fe), lead (Pb), nickel (Ni), zinc (Zn), or combinations thereof.

According to some embodiments, said component may be a polar components. According to some embodiments, said component may be an acrylic resin. According to some embodiments, said component may be an organic component. According to some embodiments, said component may be a pigment, such as carbon black. According to some embodiments, said component may be an additive.

Said solvent-based extraction, according to a further or another embodiment, comprises bringing said polyvinyl chloride product into contact with at least one solvent. Said at least one solvent may herein bring the one or more components into solution, while leaving the polyvinyl chloride unaltered, thereby achieving physical separation of said one or more components from the polyvinyl chloride.

By preference, said polyvinyl chloride product is brought into contact with at least one liquid solvent. Bringing the polyvinyl chloride product into contact with a liquid solvent has the advantage that the liquid solvent may better penetrate the polyvinyl chloride product, thus making better contact with the one or more components, thereby improving solution of said one or more components into said liquid solvent.

According to some embodiments, said polyvinyl chloride product may be brought into contact with a single solvent. According to some other embodiments, said polyvinyl chloride product may be brought into contact with two or more solvents. It may herein be possible that one or more components are soluble in a first solvent, while one or more other components are soluble in a second solvent. Alternatively, said two or more solvents may bring a synergistic effect in that said one or more components may be better soluble in the presence of the combination of the two or more solvents, than in the presence of just one of said two or more solvents. According to some embodiments, said polyvinyl chloride product may be brought into contact with a solvent and an anti-solvent, thereby further improving the physical separation of said one or more components from the polyvinyl chloride product. Herein, the solvent may have particular affinity towards one or more components to be extracted, while the anti-solvent has affinity with the polyvinyl chloride material. By combining these diverging affinities in a solvent/anti-solvent system, obtaining good separation between the one or more components and the polyvinyl chloride material may be easier.

According to a first preferred embodiment, said solvent comprises supercritical carbon dioxide (CO₂). In light of the invention, supercritical carbon dioxide may be regarded as a liquid solvent, more in particular, it concerns a supercritical fluid state. Using supercritical carbon dioxide as a solvent may be particularly useful for the extraction of plasticizers.

Said polyvinyl chloride product is by preference brought into contact with supercritical carbon dioxide (CO₂) at a temperature of between 20 and 100 °C. More by preference, said polyvinyl chloride product is brought into contact with supercritical carbon dioxide (CO₂) at a temperature of between 50 and 95 °C. More by preference, said polyvinyl chloride product is brought into contact with supercritical carbon dioxide (CO₂) at a temperature of between 75 and 90 °C.

According to a further or another embodiment, said polyvinyl chloride product is brought into contact with supercritical carbon dioxide (CO₂) at a pressure of between 20 and 50 MPa. By preference, said polyvinyl chloride product is brought into contact with supercritical carbon dioxide (CO₂) at a pressure of between 30 and 50 MPa. More by preference, said polyvinyl chloride product is brought into contact with supercritical carbon dioxide at a pressure of between 30 and 40 MPa.

In the cases where supercritical carbon dioxide is used as a solvent, it may be used in combination with a cosolvent. The cosolvent preferably has affinity to phthalates and/or is chosen from the list consisting of water, methanol, ethyl acetate, methylene chloride. Other possibilities are cosolvents that lead to a swelling of the PVC material and/or is chosen from the list consisting of CHCl₃, acetone, cyclohexanone and tetrahydrofuran (THF).

According to a second preferred embodiment, said solvent comprises an ionic liquid. In light of the present invention, the term "ionic liquid" may be interpreted as liquids which consist of both organic and/or inorganic ions, and which may contain more than one cation or anion. Another way to describe "ionic liquid" may thus be "liquid salt". Using an ionic liquid as a solvent may be particularly useful for the extraction of heavy metals. A particular kind of ionic liquids are "natural deep eutectic solvents" (NADES), which are mixtures of natural compounds, namely, organic acids and bases, amino acids, sugars, sugar alcohols, and polyalcohols that interact through hydrogen bonding and liquefy if combined in specific molar ratios.

Said polyvinyl chloride product is by preference brought into contact with the ionic liquid at a temperature of at least 100 °C. More by preference, said polyvinyl chloride product is brought into contact with the ionic liquid at a temperature of at least 150 °C.

According to a further or another embodiment, said ionic liquid may comprise one or more of 1-butyl-3-methyl imidazolium tetrafluoroborate ([BMIM][BF4]), 1-butyl-3-methyl imidazolium hexafluorophosphate ([BMIM][PF6]), 2,4-bis(2-hydroxypropyl)-1,1,3,3-tetramethyl guanidinium tetrafluoroborate ([TMGHPO2][BF4]), and tetramethyl guanidine lactate (TMGL).

According to a further or another embodiment, said ionic liquid is chosen from the group of 1-octyl-3-methyl imidazolium tetrafluoroborate ([C8mim][BF4]), 1-octyl-3-methyl imidazolium hexafluorophosphate ([C8mim][PF6]), triethylammonium hydrogen sulphate ([HNEt3][HSO4]).

It is clear that the cosolvents mentioned in connection to extraction with supercritical CO2 may also be used in combination with an extraction executed by means of ionic liquids in accordance with the second preferred embodiment.

It is noted that solvent extraction, especially when practiced with liquid or supercritical CO2 whether or not in combination with a cosolvent, tends to extract all PVC additives that are liquid at room temperature from PVC products or PVC scrap. The obtained liquid fraction could hence comprise plasticizers, stabilizers, dispersants and other additives.

According to a particular embodiment, said solvent-based extraction is a multi-step extraction comprising the steps: (i) bringing said polyvinyl chloride product into contact with at least one ionic liquid; and (ii) bringing said polyvinyl chloride product into contact with supercritical carbon dioxide (CO₂). Herein, solvent-based extraction with the ionic liquid may be advantageous for the extraction of heavy metals, and the solvent-based extraction with supercritical carbon dioxide may be advantageous for the extraction of plasticizers. According to some embodiments, step (i) may be performed before step (ii). According to some other embodiments, step (i) may be performed after step (ii).

Said polyvinyl chloride product may be brought into contact with supercritical carbon dioxide (CO₂) and/or the ionic liquid, according to some embodiments, during a contact time of between 5 and 60 minutes. By preference said contact time is between 10 and 45 minutes. More by preference, said contact time is between 15 and 30 minutes. According to some embodiments, said polyvinyl chloride product is brought into contact with supercritical carbon dioxide (CO₂) and/or the ionic liquid following a surface to volume ratio of between 1:1 and 1:10. By preference, the polyvinyl chloride product is brought into contact with supercritical carbon dioxide and/or the ionic liquid following a surface to volume ratio of between 1:3 and 1:10.

In a more particular embodiment, the polyvinyl chloride product is brought into contact with supercritical CO₂ at a temperature of between 20 and 100 °C, at a pressure of between 20 and 50 MPa, during a contact time of between 5 and 60 minutes, and with a surface to volume ratio of between 1:1 and 1: 10. More preferably, the polyvinyl chloride product is brought into contact with supercritical CO₂ at a temperature of between 50 and 95 °C, at a pressure of between 30 and 50 MPa, during a contact time of between 10 and 45 minutes, and with a surface to volume ratio of between 1:3 and 1: 10.

In an alternative particular embodiment, the polyvinyl chloride product is brought into contact with the ionic liquid at a temperature at least 100 °C, during a contact time of between 5 and 60 minutes, and with a surface to volume ratio of between 1:1 and 1: 10. More preferably, the polyvinyl chloride product is brought into contact with the ionic liquid at a temperature of at least 150 °C, during a contact time of between 10 and 45 minutes, and with a surface to volume ratio of between 1:3 and 1: 10.

According to a further or another embodiment, said method, prior to the step of subjecting said polyvinyl chloride (PVC) products to the solvent-based extraction, comprises the step of comminuting said polyvinyl chloride (PVC) products into granules, said granules having a particle size D90 of less than 2,5 mm.

In general it is remarked that, wherever median particle size D90 values are described herein, the particle size may be measured by various techniques known in the art. Particularly for larger granules, the particle size may possibly be determined by sieving techniques. The particle size of smaller particles may be determined by laser granulometry, in particular, the median particle size D90 may be determined using laser granulometry, which may be performed in accordance with ISO 13320:2020. This is a dynamic light scattering technique using a laser with an emission wavelength of 632.8 nm, measuring at a scattering angle of 90 degrees. This technique may be performed, for example, with a Malvern^{®} Mastersizer 2000 or with a Malvern^{®} Mastersizer 3000. To perform the measurement of the particle size distribution, the respective particles need to be brought in a loose state, and can be dispersed in a liquid, such as water.

According to some preferred embodiments, said polyvinyl chloride (PVC) products are comminuted into granules having a particle size D90 of less than 2 mm, more by preference of less than 1,5 mm, of less than 1 mm, most by preference of less than 0,5 mm.

According to some embodiments, the solvent-based extraction may be brought about in multiple steps. In particular, said polyvinylchloride (PVC) products may first be comminuted into granules having a first particle size, for example a particle size D90 of less than 2 mm, and may subsequently be subjected to a first solvent-based extraction step. Thereafter, the products may be comminuted into granules having a second particle size which is smaller than the first particle size, for example a particle size D90 of less than 0,5 mm, and may subsequently be subjected to a second solvent-based extraction step. As PVC material with a low amount of plasticizers is generally more brittle, it may be easier to comminute said material into small granules. Hence, a multi-step process as described herein may have the advantage that plasticizer content is gradually lowered, thereby allowing comminuting the PVC into still smaller granules. In its turn, subjecting small granules to solvent-based extraction may allow improved extraction altogether. It may be possible that two consecutive steps are performed, or that even three or more consecutive steps are performed. The used solvents in each of the steps may be the same, or may be different. For example, supercritical carbon dioxide extraction may be performed in a first step on larger particle sizes, while ionic liquid extraction may be performed in the second step on still smaller particles.

Said method, prior to the step of subjecting said polyvinyl chloride (PVC) products to the solvent-based extraction or, if present, prior to the step of comminuting said polyvinyl chloride (PVC) products into granules, may according to some embodiments also comprise the step of mechanically separating non-polyvinyl chloride (non-PVC) material from polyvinyl chloride (PVC) material. As PVC products may also comprise a lot of non-PVC material, this may render recycling said PVC products more difficult. By separating said non-polyvinyl chloride material from said polyvinyl chloride material, the recycling thereof may thus be improved. Examples of non-PVC material include polyethylene (PE), polypropylene (PP), polyethylene terephthalate (PET), or polyurethane (PU). In particular where the PVC products concern floor or wall coverings, said non-PVC material may for example include a non-PVC backing layer, a non-PVC top layer, a non-PVC pad-attached, or combinations thereof.

Additionally or alternatively, prior to the step of subjecting said polyvinyl chloride (PVC) products to the solvent-based extraction or, if present, prior to the step of comminuting said polyvinyl chloride (PVC) products into granules, said method may according to some embodiments also comprise the step of mechanically separating polyvinyl chloride (PVC) material which comprises contaminants from polyvinyl chloride (PVC) material which does not comprise contaminants. For example, PVC material comprising heavy metals may be mechanically separated from PVC material not comprising heavy metals. According to some embodiments, said mechanical separation may be performed by means of infrared (IR) techniques.

According to some embodiments, said method, after said step of subjecting said polyvinyl chloride (PVC) products to the solvent-based extraction, may also comprise the step of washing said post-extraction polyvinyl chloride (PVC) products.

According to a further or another embodiment, said method, after said step of subjecting said polyvinyl chloride (PVC) products to the solvent-based extraction, may comprise the step of purifying said at least one component. Obtaining a higher purity of the extracted component may allow subsequent processing or reuse of said component.

According to a further or another embodiment, said method, after said step of subjecting said polyvinyl chloride (PVC) products to the solvent-based extraction, thereby extracting at least said plasticizers, may comprise the step of separating non-phthalate plasticizers from phthalate plasticizers.

Said step of purifying and/or said step of separating may be performed by using one or more pressurized and potentially heated tanks. In such tank the liquid fraction of the extracted material or part thereof may be tapped off. Depending on the pressure and temperature conditions in such tank, different components may be available in the tapped off liquid fraction. The extracted material may subsequently be passed through several tanks operating at mutually different temperature and pressure conditions, and at one or more of these tanks the obtained liquid fraction may be tapped off. The different temperature and pressure conditions may lead to liquid fractions having different compositions.

According to the most preferred embodiment, said step of solvent-based extraction is performed by mixing CO₂, preferably supercritical CO₂, and potentially a cosolvent, e.g methanol or another cosolvent mentioned in connection to the first aspect of the invention, with PVC granulate obtained from scrap PVC material in a first vessel, the so-called extractor vessel. The extracted material is transported from the extractor vessel by a plurality of subsequent separator vessels operating at least at different pressures and potentially at different temperature. At at least one, and preferably at each of said separator vessels a respective liquid fraction is removed. The removal may happen at a time when the pressure is released from the respective vessel. This embodiment may conveniently lead to a separation of mutually different fractions as a part of the extraction process, preferably each having a different main component.

According to a further or another embodiment, said method, after said step of subjecting said polyvinyl chloride (PVC) products to the solvent-based extraction, may comprise the step of converting phthalate plasticizers to non-phthalate plasticizers, preferably by means of a transesterification and/or hydrogenation reaction. For example, diisononyl phthalate (DINP) may be converted to 1,2-cyclohexane dicarboxylic acid diisononyl ester (DINCH). In each case, substances which may be considered to be harmful may be converted into substances which are considered at least less harmful, to even unharmful with respect to current regulations.

According to some embodiments, said method, after said step of subjecting said polyvinyl chloride (PVC) products to the solvent-based extraction, comprises the step of supplementing said post-extraction polyvinyl chloride (PVC) products with virgin polyvinyl chloride (PVC), plasticizers, compatibilizers, or combinations thereof. This may be particularly useful in that reactivity and/or quality of the post-extraction PVC may be improved, such that it may be more suitable for manufacturing new PVC products.

According to a preferred embodiment, said polyvinyl chloride (PVC) products are floor or wall coverings, preferably floor or wall panels.

Said polyvinyl chloride (PVC) products may comprise, according to some embodiments, PVC in an amount of between 20 and 100 wt.%. More by preference, polyvinyl chloride may be present in an amount of between 20 and 40 wt.%.

In some embodiments, said polyvinyl chloride (PVC) products may also comprise filler, preferably mineral filler, in an amount of between 0 and 80 wt.%. More by preference, filler may be present in an amount of between 60 and 80 wt.%.

According to some embodiments, said polyvinyl chloride (PVC) products comprise plasticizers, preferably phthalate-based plasticizers, in an amount of between 1 and 50 phr, more preferably between 10 and 25 phr.

According to some embodiments, the solvent-based extraction may be performed in a reactor. Alternatively or additionally, the solvent-based extraction may be performed in an extruder.

Additionally or alternatively, said solvent may comprise water and/or an additional extraction step using water as a solvent may be implemented in the method according to the invention.

Additionally or alternatively, the method may also comprise a complexation step, wherein the polyvinyl chloride (PVC) products are brought into contact with one or more complexing agents, such as ethylene diamine tetra-acetic acid (EDTA), and which forms an independent inventive aspect of the present invention. The use of EDTA may be particularly beneficial for the extraction of heavy metals. Bringing the polyvinyl chloride (PVC) products into contact with one or more complexing agents, may be performed in an extruder. Alternatively, said step may be performed in a reactor.

Additionally or alternatively, use may be made a melt filtration step. In this particular case, it is noted that a certain amount of plasticizer may be required in the polyvinyl chloride (PVC) material in order to allow efficiently performing said melt filtration step. In such a case, plasticizer may be purposefully added to the polyvinyl chloride (PVC) material, for example in an amount of between 10 and 25 phr, to allow melt extraction. Subsequently, said plasticizer may be extracted again using solvent-based extraction according to the invention. Additionally or alternatively, use may be made of microwave-assisted extraction. Additionally or alternatively, use may be made of ultrasonic extraction.

With the same aim as in the first independent aspect, the present invention, in accordance with a second independent aspect pertains to a method for manufacturing polyvinyl chloride (PVC) products, comprising the step of providing polyvinyl chloride (PVC) material, wherein said polyvinyl chloride (PVC) material is obtained by recycling existing polyvinyl chloride (PVC) products by means of solvent-based extraction, and/or wherein said polyvinyl chloride (PVC) material is obtained by a method according to the first aspect of the invention.

By preference, said polyvinyl chloride (PVC) product is a floor or wall panel. According to a variant, said polyvinyl chloride (PVC) product is a sheet flooring product, such as a so-called cushion vinyl. Cushion vinyl is a multilayered flooring product, and may be built up starting from a liner having a foamed PVC layer applied thereto, i.e. the actual cushion vinyl layer. Said foamed layer may comprise two or more sublayers, and is usually obtained from applying PVC plastisol to said liner, and subsequently foaming the plastisol. On top of the foamed layer a printed decor is positioned. The printed decor may be applied as a prefabricated and preprinted foil, such as a printed PVC foil, or it may be formed directly on the foamed layer, e.g. with the intermediary of suitable primers and other base layers, such as layers on the basis of PVC plastisol. A transparent layer is applied on top of said printed decor in order to protect from abrasion and other wear. The transparent layer may also be based on PVC. Possibly, at the surface of said transparent layer a superficial lacquer layer may be present, such as an acrylate-, urethane acrylate- or polyurethane based lacquer layer.

According to some embodiments, said method comprises the steps of forming a substrate on the basis of said polyvinyl chloride (PVC) material, providing a decorative layer onto an upper surface of said substrate, and providing a wear layer onto an upper surface of said decorative layer. Forming a substrate on the basis of said polyvinyl chloride (PVC) material may be performed by means of an extrusion operation, a scattering operation, or an operation including gelling of a plastisol.

According to some embodiments, the substrate may be single-layered or comprising a plurality of substrate layers, preferably an uneven number of substrate layers. The substrate, whether single-layered or multi-layered, preferably forms at least half the thickness and/or half the weight of said panel and/or is at least available at a central location within the thickness of said panel. According to some embodiments, the decorative layer is a thermoplastic decorative layer. Preferably, said thermoplastic decorative layer is a thermoplastic decorative film, said thermoplastic decorative layer comprising a print. According to some embodiments, the wear layer is a transparent and/or translucent thermoplastic wear layer. Preferably, said transparent and/or translucent thermoplastic wear layer is a thermoplastic film. According to some embodiments, a lacquer layer is present onto an upper surface of said wear layer.

The floor or wall panel of the invention preferably has a total thickness between 2 and 8 mm, and even better between 3 and 6 mm. The substrate, whether multi-layered or single layered, preferably has a thickness between 2 mm and 5 mm. In the case of a sheet flooring product, that too may have a total thickness between 2 and 5 mm.

The floor or wall panel of the invention may be provided on at least two opposite edges with coupling parts, allowing that two such panels at the respective edges can be coupled to each other, wherein, in the coupled condition, a locking is obtained in a vertical direction perpendicular to the plane of coupled panels, and in a horizontal direction in the plane of coupled panels and perpendicular to said edges.

It is noted that it may be particularly cumbersome to use PVC material obtained by recycling in plastisols, for example in plastisols for the manufacturing of one or more layers of a cushion vinyl flooring product. For obtaining a plastisol very fine PVC (emulsion PVC) is dispersed in a liquid plasticizer. The mxing or otherwise adding recycled PVC material to such a plastisol may alter the rheology of the plastisol to such an extent that production methods, for example a method of coating a liner, such as a non-woven glass fiber layer, by means of a doctor blade on a roller, may become disturbed. The present invention in accordance with a first particular independent aspect therefor aims at enabling and/or enhancing and/or raising the use of components obtained from PVC scrap material in a PVC plastisol that may be applied in the manufacturing of cushion vinyl flooring products. Therefor, the invention, in accordance with the present first particular independent aspect is a method for manufacturing a polyvinyl chloride (PVC) product, comprising the step of providing a PVC plastisol, characterized in that
- a PVC powder is obtained by recycling and is added to said PVC plastisol, and wherein said PVC powder has a particle size as expressed by the D90 value of below 1 millimeter, preferably below 500 µm, more preferably below 300µm, or below 150 µm; and/or
- a liquid fraction comprising plasticizer is obtained by recycling and wherein said plastisol is prepared at least partially from said liquid fraction.

Preferably, said PVC product is a sheet vinyl flooring, for example a cushion vinyl flooring product, comprising at least one layer of said PVC plastisol, and preferably a liner, such as a, preferably nonwoven, glass fiber layer. Preferably said layer of said PVC plastisol is foamed. On top of said foamed layer a printed decor is positioned. The printed decor may be applied as a prefabricated and preprinted foil, such as a printed PVC foil, or it may be formed directly on the foamed layer, e.g. with the intermediary of suitable primers and other base layers, such as layers on the basis of a PVC plastisol, whether or not being provided at least partially on the basis of a PVC powder and/or a liquid fraction obtained by recycling. A transparent layer is applied on top of said printed decor in order to protect from abrasion and other wear. The transparent layer may also be based on PVC. Possibly, at the surface of said transparent layer a superficial lacquer layer may be present, such as an acrylate-, urethane acrylate- or polyurethane based lacquer layer.

By managing the D90 value of the particle size distribution of the PVC powder, the addition of such powder to a plastisol may be enabled or raised with a minimized disturbance of production processes, even though the PVC particles may in average still be larger than the virgin E-PVC (emulsion PVC) particles (in average e.g. about 2µm) in the plastisol. The D90 value of the particle size is small enough and/or the specific surface of the particles large enough, to also enable some chemical interaction in the plastisol, such that the recycled PVC powder is not only functioning as a filler material. The PVC powder may be mixed into the plastisol prior to application to a liner, or may be applied in or unto the plastisol after application to a liner, for example by means of a scattering operation.

The PVC powder is preferably obtained by milling or grinding PVC scrap. According to a preferred embodiment, said milling or grinding is executed after said PVC scrap has been subjected to a solvent-based extraction, and/or with said PVC scrap being cooled, for example to a temperature below 10°C or below -20°C and/or by means of a cryogenic treatment for example with liquid nitrogen. PVC scrap that has been subjected to a solvent-based extraction, which in particular extracts at least a portion of the plasticizers, and/or is cooled, is more rigid and can be milled or ground down to smaller particle sizes with less efforts. This is especially the case when the PVC scrap is obtained from cushion vinyl flooring products itself. Such flooring products are highly plasticized and are difficult to mill or ground down to a particle size with a D90 value of 300 µm or below. The inventors have shown that a preceding step of extraction of the plasticizer enables obtaining particle sizes as expressed by D90 of about 100µm with similar milling or grinding efforts.

Preferably said PVC powder is added to said plastisol in an amount of at least 1 percent by weight, and preferably less than 15 percent by weight, more preferably the content of said PVC powder is between 2 and 10% by weight of the plastisol.

By preparing said plastisol at least partially using said liquid fraction, a plastisol having a relatively high recycled content can be obtained. The liquid plasticizer content of a plastisol can be as high as 20 percent by weight, and the inventors have notices that the entire plasticizer content may be replaced by a liquid fraction which is for example obtained by solvent extraction as described in the first aspect of the invention. Even though such liquid fraction may contain a mixture of different plasticizers and other liquid additives, such as stabilizers and dispersants, the inventors have noted that it does not or only minimally interfere with the properties of the plastisol. Preferably, said liquid fraction forms at least 2 or at least 5 percent by weight of said plastisol, and preferably at most 30 percent by weight of said plastisol. Preferably, at least 50% by weight of the plasticizer content of the plastisol is obtained from said liquid fraction.

It is clear that said PVC powder and/or said liquid fraction can be obtained by means of the recycling methods described in the first aspect of the present invention. Preferably at least an extraction by means of liquid CO₂ or supercritical CO₂ has been practiced. Preferably, said liquid fraction contains the entire liquid fraction obtained from solvent extraction of PVC scrap comprising at least cushion vinyl flooring products.

According to a preferred embodiment of said first particular independent aspect, said recycling comprises:
- providing industrial, post-industrial and/or post-consumer flexible PVC products, i.e. products comprising PVC and plasticizer, preferably at a rate of 5 phr or more, such as cushion vinyl flooring products or floor panels comprising soft PVC, such as LVT;
- subjecting said PVC products to a solvent-based extraction, preferably at least using supercritical and/or liquid CO₂ to thereby extract from said PVC product a liquid fraction comprising at least said plasticizer; wherein said liquid fraction is, or is obtained from, said base liquid fraction; and
- subjecting the thus extracted PVC products to a milling or grinding to thereby create a base PVC powder fraction; wherein said PVC powder is, or is obtained from, said base PVC powder fraction.

Preferably said base liquid fraction is formed for at least 75 wt%, or at least 90 wt% of plasticizers. Other components may be stabilizers, such as CaZn stabilizer, dispersants or other liquid additives for PVC. The inventors have noted that such base liquid fraction obtained by solvent extraction with supercritical CO₂ does not need further purification or separation to enable its use as the liquid fraction in said first particular independent aspect, namely as a plasticizer in plastisol. In such case the composition of said base liquid fraction equals the composition of said liquid fraction used in the preparation of said plastisol. Further purification or separation remains of course possible.

Said base PVC powder fraction preferably has a particle size distribution with a D90 value of 500µm or less, or of 300 µm or less, or of 150µm or less. In such case, the base PVC powder fraction can be added without further separation or sieving to said plastisol. In other words, the particle size distribution of the base PVC powder fraction may be identical to the particle size distribution of said PVC powder added to said plastisol. It is noted that the d10 value may be larger than 10 µm, or larger than 35 µm.

It is highly convenient to create both the liquid fraction and the PVC powder from a batch of flexible, i.e. plasticized, PVC products. As explained above, the base liquid fraction may be used to form at least a part of the plasticizer of a plastisol, and the base PVC powder fraction that is created from the already extracted PVC products may have a convenient particle distribution, e.g. with a D90 value below 500µm or below 300µm, e.g. around 100µm, to be mixed in the plastisol without interfering with the properties of the plastisol to an unacceptable extent. Preferably, said base powder fraction is mixed, e.g. by scattering, into said PVC plastisol until at least 5wt%, or at least 25wt% of said plastisol is made up of said base powder fraction. The inventors have noted that this content of recycled PVC powder is achievable, especially when the particle distribution has a D90 value below 500 µm or below 300µm, e.g. around 100 µm.

By using the liquid fraction and the PVC powder in the plastisol of the foamed layer of a cushion vinyl flooring product, a recycled content as high as 10 to 25 wt% of the entire flooring product may be obtained, while upto now it was believed that it was impossible to include any recycled content in a plastisol because of changing properties, especially changing rheological properties that made common production techniques, such as the use of doctor blades, impractical. The present inventors have thus succeeded in providing for the first time a cushion vinyl flooring product with a respectable recycled content. It is thus clear that the present invention also, independently, is a sheet vinyl flooring product, preferably a cushion vinyl flooring product, comprising a, preferably foamed, PVC layer obtained from a plastisol, wherein at least 10 wt% of said PVC layer and/or of said sheet vinyl flooring product, is obtained from recycled material, preferably from material obtained by treating scrap of plasticized PVC. It is clear that such sheet vinyl floor product may be obtained using one or more of the techniques described by means of the other independent aspects and/or their preferred embodiments.

With the same aim as in the first and second independent aspect, the present invention, in accordance with a third independent aspect pertains to a polyvinyl chloride (PVC) product comprising polyvinyl chloride (PVC) material and one or more components chosen from the group of plasticizers, heavy metals, polar components, acrylic resins, organic components, pigments, additives, or combinations thereof, and/or wherein said polyvinyl chloride (PVC) material is obtained by a method according to the first aspect of the invention and/or wherein said polyvinyl chloride (PVC) product is obtained by a method according to the second aspect of the invention.

By preference, said one or more components have a concentration of below 1000 ppm, preferably of below 100 ppm.

By preference, said polyvinyl chloride (PVC) product is a floor or wall panel.

According to some embodiments, said polyvinyl chloride (PVC) product comprises a substrate on the basis of said polyvinyl chloride (PVC) material, a decorative layer provided onto an upper surface of said substrate, and a wear layer provided onto an upper surface of said decorative layer.

According to some embodiments, the substrate may be single-layered or comprising a plurality of substrate layers, preferably an uneven number of substrate layers. The substrate, whether single-layered or multi-layered, preferably forms at least half the thickness and/or half the weight of said panel and/or is at least available at a central location within the thickness of said panel. According to some embodiments, the decorative layer is a thermoplastic decorative layer. Preferably, said thermoplastic decorative layer is a thermoplastic decorative film, said thermoplastic decorative layer comprising a print. According to some embodiments, the wear layer is a transparent and/or translucent thermoplastic wear layer. Preferably, said transparent and/or translucent thermoplastic wear layer is a thermoplastic film. According to some embodiments, a lacquer layer is present onto an upper surface of said wear layer.

The floor or wall panel of the invention preferably has a total thickness between 2 and 8 mm, and even better between 3 and 6 mm. The substrate, whether multi-layered or single layered, preferably has a thickness between 2 mm and 5 mm.

The floor or wall panel of the invention may be provided on at least two opposite edges with coupling parts, allowing that two such panels at the respective edges can be coupled to each other, wherein, in the coupled condition, a locking is obtained in a vertical direction perpendicular to the plane of coupled panels, and in a horizontal direction in the plane of coupled panels and perpendicular to said edges.

In view of all aspects, it is noted that the polyvinyl chloride (PVC) product, whether this concerns a product to be recycled by means of a method according to the first aspect of the invention, whether this concerns a product according to the third aspect of the invention, and/or whether this concerns a product to be manufactured by means of a method according to the second aspect of the invention, is not limited to floor or wall panels. Other polyvinyl chloride (PVC) products may be suitable and/or relevant as well in light of the present invention, such as PVC toys, PVC door profiles, PVC window profiles, PVC containers, and the like.

It is noted that some PVC products may comprise high amounts of fillers, such as upto 80 wt% of calcium carbonate. Thus, calcium carbonate may to a large extent contribute to the environmental impact of the entire PVC product. With the aim of providing alternative PVC product that, in accordance with preferred embodiments may still further limit the environmental impact of PVC products, the present invention, in accordance with a fourth independent aspect thereof, is a floor or wall covering or a floor or wall panel comprising a substrate and a top layer provided on said substrate, wherein said substrate comprises calcium carbonate, with as a characteristic that at least a portion of said calcium carbonate is of a biological and/or a waste origin and/or is obtained by carbonatation of calcium oxide. These sources of calcium carbonate offer a high potential of limiting the environmental impact of such floor or wall products. It is clear that the floor or wall products of the present fourth independent aspect may be obtained through a method showing the characteristics of the first and/or second aspect and/or the first particular independent aspect of the present invention and/or the preferred embodiments thereof. For example such products may contain PVC obtained through a method of recycling in accordance with the first independent aspect of the present invention.

Preferably, said calcium carbonate is at least obtained from egg shells. Alternatively, said calcium carbonate may be at least obtained from snail shells or seafood shells, such as the shells from mussels, oysters and/or clams. Calcium carbonate obtained from these sources, especially from egg shells, may have a platelet shape that results in an increased dimensional stability of the floor or wall covering or panel. Further alternatively, said calcium carbonate is at least obtained from paper waste or is at least obtained as waste minerals from the exploitation of shale gas.

According to a special embodiment said calcium carbonate is at least obtained by carbonatation of calcium oxide. Carbonatation of calcium oxide may lead to calcium carbonate particles that have a better defined particle size and shape. The resulting mechanical properties, such as the bending strength, as well as the dimensional stability of a floor or wall covering or panel that is filled with such material may be better predictable. This is also the case when the origin of the calcium oxide is not from waste or biological. Preferably, however the carbon dioxide needed for the carbonatation process may be recuperated from exhaust gasses, for example of power plants. By doing so, a negative carbon foot print may be obtained.

With the same aim as in the fourth aspect, the present invention in accordance with its fifth independent aspect is a method of manufacturing floor or wall coverings or floor or wall panels, wherein said method at least comprises the following steps:
- the step of providing calcium carbonate;
- the step of providing a substrate material comprising said calcium carbonate;

With as a characteristic that said calcium carbonate is of a biological and/or a waste origin and/or is obtained by carbonatation of calcium oxide.

It is clear that the method of the fifth aspect may be practiced to obtain the coverings or panels of the fourth aspect and/or preferred embodiments thereof.

Preferably, said calcium carbonate is provided by obtaining it from egg shells. The calcium carbonate may be obtained by grinding egg shells and removing the egg membrane. The egg membrane contains collagen which may be valorized in higher end applications. According to an alternative calcium carbonate is provided at least by obtaining it from snail shells or seafood shells, preferably at least by grinding said shells. The calcium carbonate, in particular that which is obtained from egg shells may have a platelet shape. According to still a further alternative said calcium carbonate is provided at least by obtaining it from paper waste or from waste minerals from the exploitation of shale gas, for example from the waste water produced in shale gas fracturing.

According to a special preferred embodiment, said calcium carbonate is provided at least by carbonatation of calcium oxide. Said calcium oxide may be suspended in water during the carbonatation process, and preferably functionalized. Such process may lead to a well-controlled size and shape of the obtained calcium carbonate particles. For example platelet shaped particles may be obtained. Preferably, the carbon dioxide needed in the carbonatation process is obtained from exhaust gasses, for example of power plants.

The substrate of the coverings or panels of the fourth and fifth aspect is preferably a filled synthetic material, wherein the filler material comprises said calcium carbonate. The synthetic material may be a thermoplastic material chosen from the list consisting of polyvinyl chloride, polyethylene terephthalate, polypropylene, polyethylene and polyurethane. Preferably, at least 50 wt% of said filled synthetic material is said filler material.

In general, said calcium carbonate preferably has a platelet shape.

It is clear that the present invention, in accordance with one or more of its independent aspects, may provide for floor or wall products with minimal environmental impact. In accordance with a second particular independent aspect the invention is a floor or wall product comprising a substrate or substrate layer of filled polyvinyl chloride, wherein the amount of filler is at least 15wt%, at least 20wt% or at least 50 wt% of said substrate, characterized in that said filler consists at least for 50wt% out of calcium carbonate from a biological source, a waste source, and/or a carbonatation source where the carbon dioxide used for carbonation is recuperated, and in that said polyvinyl chloride consists at least for 50 wt% out of polyvinyl chloride obtained through a method for recycling polyvinyl chloride products in accordance with said first independent aspect and/or the preferred embodiments thereof. It is noted that the calcium carbonate may be obtained as disclosed in connection to the fourth and/or fifth aspect of the invention.

The floor or wall product of the second particular independent aspect may be obtained through a method further showing the characteristics of said second independent aspect and/or the first particular independent aspect of the invention.

Preferably said floor or wall product of the second particular independent aspect is a sheet vinyl flooring product or a flooring panel.

Preferably said substrate or substrate layer comprises 0-5 phr of plasticizer, or wherein said substrate or substrate layer comprises more than 15 phr of plasticizer wherein said plasticizer is obtained for at least 50wt% from a base liquid fraction resulting from subjecting PVC products to a solvent-based extraction, as described in the context of the first and/or second aspect and/or first particular independent aspect of the invention.

With the purpose of better illustrating the invention, a number of practical examples are described below, in which one or more features of the present invention are used.

A first practical example concerns recycling of flexible polyvinyl chloride (PVC) products, which products comprise polyvinyl chloride (PVC) material, one or more plasticizers, and one or more heavy metals. Recycling of said flexible polyvinyl chloride (PVC) products may be done by performing the following steps:
(i) bringing the polyvinyl chloride (PVC) product into contact with one or more complexing agents, in particular with ethylene diamine tetra-acetic acid (EDTA); and
(ii) bringing the polyvinyl chloride (PVC) into contact with supercritical carbon dioxide (CO₂).

According to a first possibility, step (i) is preferably performed in an extruder, and allows the complexation of heavy metals with the EDTA, thereby extracting said heavy metals from the polyvinyl chloride (PVC) product. In particular, the heavy metal + EDTA complex may be filtered from the extruder melt, i.e. by means of melt filtration. Subsequently, step (ii) is performed, preferably in a reactor, allowing the extraction of plasticizers from the polyvinyl chloride (PVC) product.

Alternatively, according to a second possibility, steps (i) and (ii) may be performed at the same time in a reactor. In said reactor, plasticizer is extracted, while the heavy metal + EDTA complex may remain in the polymer material. Subsequently, the polymer material may be fed into an extruder, in which the heavy metal + EDTA complex may be filtered from the extruder melt, i.e. by melt filtration.

A second practical example concerns recycling of rigid polyvinyl chloride (PVC) products, which products comprise polyvinyl chloride (PVC) material and one or more heavy metals. Recycling of said rigid polyvinyl chloride (PVC) products may be done by bringing the polyvinyl chloride (PVC) product into contact with one or more complexing agents, in particular with ethylene diamine tetra-acetic acid (EDTA). According to a first possibility, this may preferably be performed in an extruder, and allows the complexation of heavy metals with the EDTA, thereby extracting said heavy metals from the polyvinyl chloride (PVC) product. In particular, the heavy metal + EDTA complex may be filtered from the extruder melt, i.e. by melt filtration. According to a second possibility, this may preferably be performed in an extruder, and allows the complexation of heavy metals with the EDTA. Extraction itself of the heavy metal + EDTA complex may be achieved subsequently in a reactor, by subjecting the polyvinyl chloride (PVC) material to a solvent-based extraction, preferably by using water as a solvent, at high temperature and pressure.

According to a third possibility, this may preferably be performed in an extruder, and allows the complexation of heavy metals with the EDTA. In order to improve flowability and/or melting properties of the rigid polyvinyl chloride (PVC) material in the extruder, one or more plasticizers may be added as well. The heavy metal + EDTA complex may be filtered from the extruder melt, i.e. by melt filtration. In a subsequent step, the extruder melt may be brought into contact with supercritical carbon dioxide (CO₂) in order to extract the added plasticizers. This is preferably done in a reactor. The extracted plasticizers may be effectively reused for addition in the extruder.

According to a fourth possibility, this may preferably be performed in an extruder, and allows the complexation of heavy metals with the EDTA. In order to improve flowability and/or melting properties of the rigid polyvinyl chloride (PVC) material in the extruder, one or more plasticizers may be added. Extraction itself of the heavy metal + EDTA complex may be achieved subsequently in a reactor, by subjecting the polyvinyl chloride (PVC) material to a solvent-based extraction, preferably by using water and tetrahydrofuran (THF) as solvents, at high temperature and pressure. Water and THF may herein act as a solvent/anti-solvent system, wherein the heavy metal + EDTA complex shows affinity for water, while the PVC material shows affinity for THF. In a subsequent step, the extruder melt may be brought into contact with supercritical carbon dioxide (CO₂) in order to extract the added plasticizers. This is preferably done in a reactor. The extracted plasticizers may be effectively reused for addition in the extruder.

A further practical example concerns recycling of flexible polyvinyl chloride (PVC) products, which products comprise polyvinyl chloride (PVC) material, one or more plasticizers, and one or more heavy metals. Recycling of said flexible polyvinyl chloride (PVC) products may be done by performing the following steps:
(i) bringing the polyvinyl chloride (PVC) product into contact with one or more ionic liquids, in particular with one or more NADES; and
(ii) bringing the polyvinyl chloride (PVC) into contact with supercritical carbon dioxide (CO₂).

According to a first possibility, step (i) is preferably performed in a reactor, and allows the complexation of heavy metals with the ionic liquid, in particular NADES, thereby extracting said heavy metals from the polyvinyl chloride (PVC) product. In particular, the heavy metal + NADES complex may be filtered from the extruder melt, i.e. by melt filtration. Subsequently, step (ii) is performed, preferably in a reactor, allowing the extraction of plasticizers from the polyvinyl chloride (PVC) product.

According to a second possibility, it may also be possible that step (ii) is performed before step (i).

Alternatively, according to a third possibility, it may be possible that both the heavy metals and the plasticizers are extracted in step (i), rendering step (ii) obsolete. In both the first and second possibility the ionic liquids may be effectively reused.

A further practical example concerns recycling of flexible polyvinyl chloride (PVC) products, which products comprise polyvinyl chloride (PVC) material, one or more plasticizers, and one or more heavy metals. Recycling of said flexible polyvinyl chloride (PVC) products may be done by performing the following steps:
(i) bringing the polyvinyl chloride (PVC) product into contact with one or more ionic liquids, in particular with one or more NADES; and
(ii) bringing the polyvinyl chloride (PVC) into contact with supercritical carbon dioxide (CO₂).

According to a first possibility, step (i) is preferably performed in a reactor, and allows the complexation of heavy metals with the ionic liquid, in particular NADES, thereby extracting said heavy metals from the polyvinyl chloride (PVC) product. In particular, the heavy metal + NADES complex may be filtered from the extruder melt, i.e. by melt filtration. Subsequently, step (ii) is performed, preferably in a reactor, allowing the extraction of plasticizers from the polyvinyl chloride (PVC) product.

According to a second possibility, it may also be possible that step (ii) is performed before step (i).

Alternatively, according to a third possibility, it may be possible that both the heavy metals and the plasticizers are extracted in step (i), rendering step (ii) obsolete. In both the first and second possibility the ionic liquids may be effectively reused.

A further practical example concerns recycling of flexible polyvinyl chloride (PVC) products, which products comprise polyvinyl chloride (PVC) material, one or more plasticizers, and one or more heavy metals. Recycling of said flexible polyvinyl chloride (PVC) products may be done by performing the following steps:
(i) bringing the polyvinyl chloride (PVC) product into contact with a first ionic liquid, or a first mixture of ionic liquids; and
(ii) bringing the polyvinyl chloride (PVC) product into contact with a second ionic liquid, or a second mixture of ionic liquids.

According to a first possibility, step (i) is preferably performed in a reactor, and allows the complexation of heavy metals with the first ionic liquid, or with the first mixture of ionic liquids, thereby extracting said heavy metals from the polyvinyl chloride (PVC) product. Subsequently, step (ii) is performed, preferably in a reactor, and allows the complexation of plasticizers with the second ionic liquid, or with the second mixture of ionic liquids, thereby extracting said plasticizers from the polyvinyl chloride (PVC) product.

According to a second possibility, it may also be possible that step (ii) is performed before step (i).

A further practical example concerns recycling of flexible polyvinyl chloride (PVC) products, which products comprise polyvinyl chloride (PVC) material, one or more plasticizers, and one or more heavy metals. Recycling of said flexible polyvinyl chloride (PVC) products may be done by subjecting the polyvinyl chloride (PVC) products to melt filtration. Melt filtration may specifically be performed in an extruder, for example using a filter having openings with a diameter of less than 20 µm. In order to improve flowability and/or melting properties of the rigid polyvinyl chloride (PVC) material in the extruder, one or more plasticizers may be added as well. In a subsequent step, the extruder melt may be brought into contact with supercritical carbon dioxide (CO₂) in order to extract the added plasticizers. This is preferably done in a reactor. The extracted plasticizers may be effectively reused for addition in the extruder.

With the intention of better showing the characteristics according to the invention, in the following, as an example without limitative character, several embodiments are described, with reference to the accompanying drawings, wherein
- Figure 1 illustrates some steps in a method for recycling PVC products in accordance with amongst others the first aspect of the invention;
- Figure 2 illustrates some steps in a method for manufacturing a PVC products in accordance with amongst others the first particular independent aspect of the invention;
- Figure 3 illustrates a top view in accordance with the arrow F3 on figure 2; and
- Figure 4 shows a cross-section in accordance with the line IV-IV on figure 3.

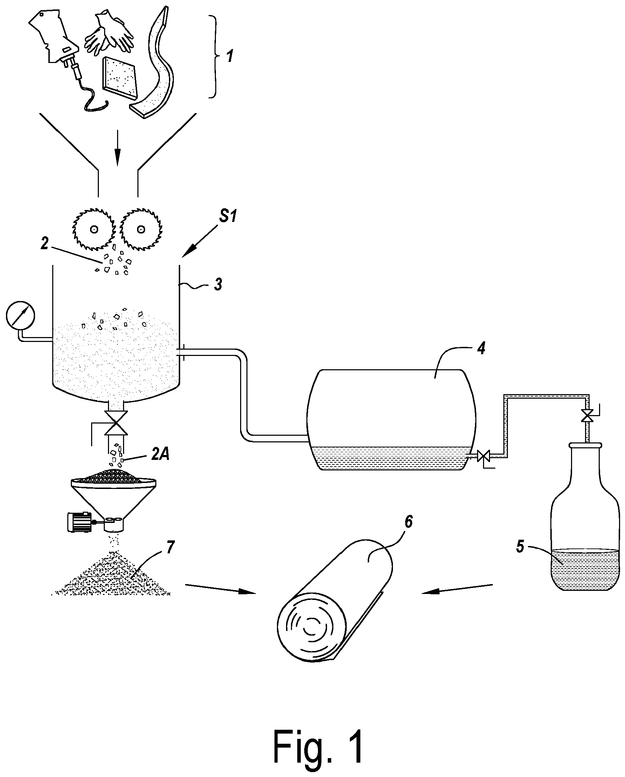

Figure 1 illustrates a method for recycling PVC products 1, wherein the method comprises the step S1 of subjecting said PVC products to a solvent-based extraction.

In the represented case post-industrial and/or post-consumer flexible PVC products 1 comprising plasticizer at a rate of 5 phr or more are comminuted into granules 2 and providing the granules 2 in an extraction vessel 3. Said step S1 of solvent-based extraction is performed by mixing supercritical CO2 and a cosolvent, e.g. methanol with the granules 2.

The extracted material is transported from the extractor vessel 3 to one or more separator vessels 4, in this case only one extractor vessel 4 is represented. At the extractor vessel 4 a base liquid fraction 5 may be removed, which may or may not be further subjected to purification before being reused in a PVC product, e.g. a sheet vinyl flooring 6.

The thus extracted PVC granules 2A may be milled to yield a base PVC powder fraction 7 at the outlet of the extractor vessel 3. Also the base PVC powder fraction 7 may be reused in a PVC product, such as in a sheet vinyl flooring 6.

The thus obtained base liquid fraction 5 may be formed for at least 75 wt% of plasticizers and can be used without further purification as plasticizer in a PVC plastisol 8. The base PVC powder fraction 7 may have a particle size distribution with a D90 value of 500µm or less, and can be added without further separation or sieving to a PVC plastisol 8.

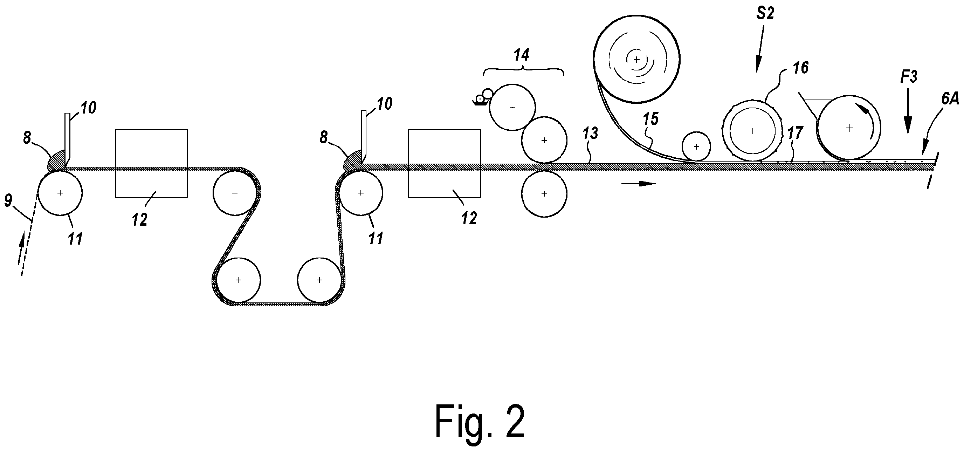

Figure 2 illustrates the use of such a plastisol 8 for the manufacturing of a sheet vinyl flooring 6. Hereto a liner 9, for example a woven glass fiber layer is provided with said plastisol 8 by means of a doctor blade 10 on a roll 11, and then gelled in an oven 12. In the example, the coating and gelling is repeated. Subsequently a printed pattern 13 is provided, in this case by means of roller printing 14, and a transparent layer 15 is applied on top of said printed pattern 13. In the example, an embossing step S2, using an embossing roller 16, is performed to create excavations 17 at least in said transparent layer 15. Downstream of the embossing roller 16 a roller application of a top coating is shown.

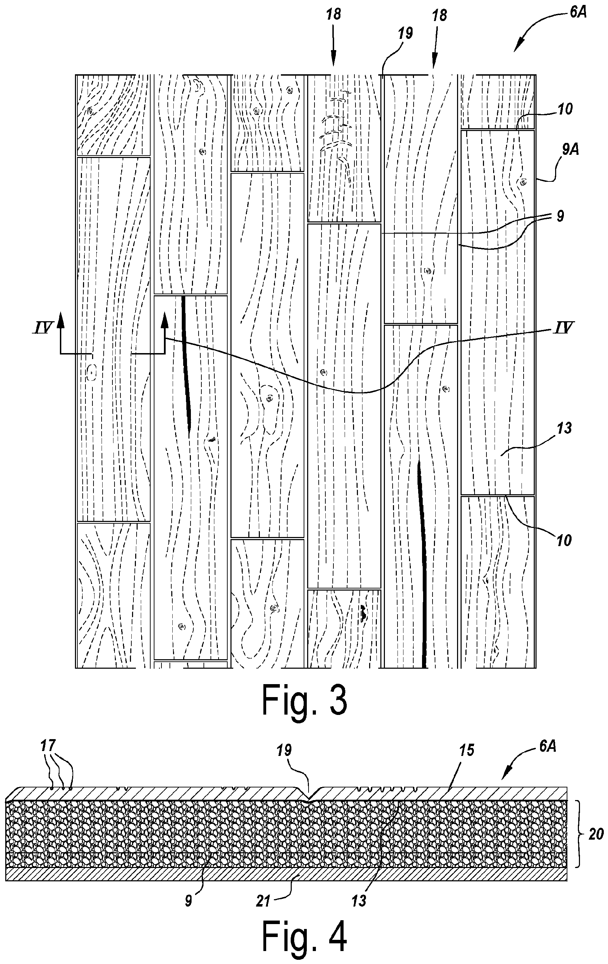

Figure 3 in a top view clearly shows that the printed pattern 13 represents multiple adjacent rows 18 of wooden panels. From figure 4 it can be gleaned that the adjacent rows 18 are separated by means of a groove 19, in this case a V-shaped groove. In the example the layer 20 provided by the plastisol 8 has been foamed, and the product of figure 4 is hence an example of a cushion vinyl sheet flooring 6A.

On the bottom of the cushion vinyl sheet flooring 6A, in this case, a textile backing 21 has been provided. Such textile backing 21 provides for additional walking comfort. Preferably such textile backing 21 is a non-woven textile of polypropylene filaments. In further recycling, the polypropylene content may be mixed with the PVC content without unduly complicating production processes. Alternatively the textile backing 21 may be a non-woven textile of PVC or polyethylene terephthalate.

The present invention also relates to methods and products as defined by the following numbered paragraphs:
1.- Method for recycling polyvinyl chloride (PVC) products, preferably polyvinyl chloride (PVC) floor or wall coverings, characterized in that, said method comprises the step S1 of subjecting said polyvinyl chloride (PVC) products 1 to a solvent-based extraction.
2.- Method according to numbered paragraph 1, characterized in that, said solvent-based extraction comprises extracting at least one component from the polyvinyl chloride (PVC) products, said component is chosen from the group of plasticizers, heavy metals, polar components, acrylic resins, organic components, pigments, additives, or combinations thereof.
3.- Method according to numbered paragraph 2, characterized in that, said component is a plasticizer, preferably a phthalate-based plasticizer in accordance with formula I, wherein R and R' may be the same or may be different, and wherein R and/or R' are chosen from the group of CₙH₂ₙ₊₁, wherein n is an integer between 1 and 15, more preferably chosen from the group of diisononyl phthalate (DINP), di-(2-ethylhexyl) phthalate (DEHP), dibutyl phthalate (DBP), diisoheptyl phthalate (DIHP), di-n-octyl phthalate (DOP), diisooctyl phthalate (DIOP), diisodecyl phthalate (DIDP), or combinations thereof. 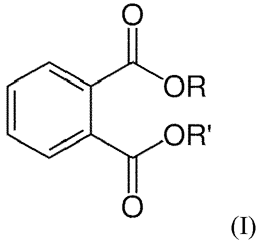
4.- Method according to any of the preceding numbered paragraphs, characterized in that, said solvent-based extraction comprises bringing said polyvinyl chloride product 1 into contact with at least one solvent, preferably at least one liquid solvent.
5.- Method according to any of the preceding numbered paragraphs, characterized in that, said solvent comprises supercritical carbon dioxide (CO₂).
6.- Method according to numbered paragraph 5, characterized in that, said polyvinyl chloride product is brought into contact with supercritical carbon dioxide (CO₂) at a temperature of between 20 and 100 °C, preferably of between 50 and 95 °C, more preferably of between 75 and 90 °C.
7.- Method according to numbered paragraph 5 or 6, characterized in that, said polyvinyl chloride product is brought into contact with supercritical carbon dioxide (CO₂) at a pressure of between 20 and 50 MPa, preferably of between 30 and 50 MPa.
8.- Method according to any of the preceding numbered paragraphs, characterized in that, said solvent comprises an ionic liquid.
9.- Method according to numbered paragraph 8, characterized in that, said polyvinyl chloride product is brought into contact with the ionic liquid at a temperature of at least 100 °C, preferably of at least 150 °C.
10. Method according to numbered paragraph 8 or 9, characterized in that, said ionic liquid comprises one or more of 1-butyl-3-methyl imidazolium tetrafluoroborate ([BMIM][BF4]), 1-butyl-3-methyl imidazolium hexafluorophosphate ([BMIM][PF6]), 2,4-bis(2-hydroxypropyl)-1,1,3,3-tetramethyl guanidinium tetrafluoroborate ([TMGHPO2] [BF4]), and tetramethyl guanidine lactate (TMGL).
11.- Method according to any of numbered paragraphs 8 to 10, characterized in that, said ionic liquid is chosen from the group of 1-octyl-3-methyl imidazolium tetrafluoroborate ([C8mim][BF4]), 1-octyl-3-methyl imidazolium hexafluorophosphate ([C8mim][PF6]), triethylammonium hydrogen sulphate ([HNEt3][HSO4]).
12.- Method according to any of the preceding numbered paragraphs, characterized in that, said solvent-based extraction is a multi-step extraction comprising the steps:
   (i) bringing said polyvinyl chloride product into contact with at least one ionic liquid; and
   (ii) bringing said polyvinyl chloride product into contact with supercritical carbon dioxide (CO₂).
13.- Method according to any of the preceding numbered paragraphs, characterized in that, said polyvinyl chloride product is brought into contact with said solvent, e.g. supercritical carbon dioxide (CO₂) and/or an ionic liquid, during a contact time of between 5 and 60 minutes, preferably of between 10 and 45 minutes, more preferably of between 15 and 30 minutes.
14.- Method according to any of the preceding numbered paragraphs, characterized in that, said polyvinyl chloride product is brought into contact with said solvent, e.g. supercritical carbon dioxide (CO₂) and/or an ionic liquid, following a surface to volume ratio of between 1:1 and 1:10, preferably of between 1:3 and 1:10.
15.- Method according to any of the preceding numbered paragraphs, characterized in that, said method, prior to the step of subjecting said polyvinyl chloride (PVC) products to the solvent-based extraction, comprises the step of comminuting said polyvinyl chloride (PVC) products into granules, said granules having a particle size D90 of less than 2,5 mm, preferably of less than 1 mm, more preferably of less than 0,5 mm.
16.- Method according to any of the preceding numbered paragraphs, characterized in that, said method, prior to the step of subjecting said polyvinyl chloride (PVC) products to the solvent-based extraction or, if present, prior to the step of comminuting said polyvinyl chloride (PVC) products into granules, comprises the step of mechanically separating non-polyvinyl chloride (non-PVC) material from polyvinyl chloride (PVC) material.
17.- Method according to any of the preceding numbered paragraphs, characterized in that, said method, after said step of subjecting said polyvinyl chloride (PVC) products to the solvent-based extraction, comprises the step of washing said post-extraction polyvinyl chloride (PVC) products.
18.- Method according to any of the preceding numbered paragraphs, characterized in that, said method, after said step of subjecting said polyvinyl chloride (PVC) products to the solvent-based extraction, wherein at least one component chosen from the group consisting of plasticizers, heavy metals, polar components, acrylic resins, organic components, pigments, additives and combinations thereof is extracted, comprises the step of purifying said at least one component.
19.- Method according to numbered paragraph 18, characterized in that, said method, after said step of subjecting said polyvinyl chloride (PVC) products to the solvent-based extraction, thereby extracting at least plasticizers, comprises the step of separating non-phthalate plasticizers from phthalate plasticizers.
20.- Method according to any of the preceding numbered paragraphs, characterized in that, said method, after said step of subjecting said polyvinyl chloride (PVC) products to the solvent-based extraction, thereby extracting at least plasticizers, comprises the step of converting phthalate plasticizers to non-phthalate plasticizers, preferably by means of a transesterification and/or hydrogenation reaction.
21.- Method according to any of the preceding numbered paragraphs, characterized in that, said method, after said step of subjecting said polyvinyl chloride (PVC) products to the solvent-based extraction, comprises the step of supplementing said post-extraction polyvinyl chloride (PVC) products with virgin polyvinyl chloride (PVC), plasticizers, compatibilizers, or combinations thereof.
22.- Method according to any of the preceding numbered paragraphs, characterized in that, said polyvinyl chloride (PVC) products are floor or wall coverings, preferably floor or wall panels.
23. - Method according to any of the preceding numbered paragraphs, characterized in that, said polyvinyl chloride (PVC) products comprise PVC in an amount of between 20 and 100 wt.%.
24.- Method according to any of the preceding numbered paragraphs, characterized in that, said polyvinyl chloride (PVC) products comprise filler, preferably mineral filler, in an amount of between 0 and 80 wt.%.
25. - Method according to any of the preceding numbered paragraphs, characterized in that, said polyvinyl chloride (PVC) products comprise plasticizers, preferably phthalate-based plasticizers, in an amount of between 1 and 50 phr, more preferably between 10 and 25 phr.
26.- Method according to any of the preceding numbered paragraphs, characterized in that said solvent comprises supercritical carbon dioxide and/or an ionic liquid, and a cosolvent.
27.- Method according to numbered paragraph 26, characterized in that said cosolvent has affinity to phthalates and/or leads to a swelling of said PVC products.
28.- Method according to numbered paragraph 26 or 27, characterized in that said cosolvent is chosen from the group consisting of water, methanol, ethyl acetate, methylene chloride, CHCl₃, acetone, cyclohexanone and tetrahydrofuran.
29.- Method for manufacturing polyvinyl chloride (PVC) products, comprising the step of providing polyvinyl chloride (PVC) material, characterized in that, said polyvinyl chloride (PVC) material is obtained by recycling existing polyvinyl chloride (PVC) products by means of solvent-based extraction, and/or wherein said polyvinyl chloride (PVC) material is obtained by a method according to any of the preceding numbered paragraphs.
30.- Method according to numbered paragraph 29, characterized in that, said method comprises the steps of forming a substrate on the basis of said polyvinyl chloride (PVC) material, providing a decorative layer onto an upper surface of said substrate, and providing a wear layer onto an upper surface of said decorative layer.
31. - Method according to numbered paragraph 30, characterized in that, said polyvinyl chloride (PVC) product that is manufactured and/or recycled is a floor or wall panel.
32.- Method according to numbered paragraph 29 or 30, characterized in that said polyvinyl chloride (PVC) product that is manufactured and/or recycled is a sheet flooring product.
33.- Method according to numbered paragraph 32, characterized in that said sheet flooring product is a cushion vinyl flooring product comprising a liner, preferably a glass fiber layer, and a foamed PVC layer applied thereto, wherein said foamed PVC layer is obtained by applying a PVC plastisol to said liner, and subsequently foaming the plastisol, wherein, on top of said foamed PVC layer a printed decor is positioned.
34.- Method according to numbered paragraph 33, characterized in that said method comprises the step of applying said PVC plastisol to said liner at least by means of a doctor blade.
35.- Method for manufacturing a polyvinyl chloride (PVC) product, comprising the step of providing a PVC plastisol 8, characterized in that
   - a PVC powder is obtained by recycling and is added to said PVC plastisol, and wherein said PVC powder has a particle size as expressed by the D90 value of below 1 millimeter, preferably below 500 µm, more preferably below 300µm, or below 150 µm; and/or
   - a liquid fraction comprising plasticizer is obtained by recycling and wherein said plastisol is prepared at least partially from said liquid fraction.
36.- Method according to numbered paragraph 35, characterized in that said PVC product is a sheet vinyl flooring 6, preferably a cushion vinyl flooring product 6A, comprising at least one layer of said PVC plastisol, and preferably a liner 9, such as a, preferably nonwoven, glass fiber layer, wherein preferably said layer of said PVC plastisol 8 is foamed, wherein on top of said at least one layer of said PVC plastisol a printed decor is positioned.
37.- Method according to numbered paragraph 35 or 36, characterized in that said PVC powder is mixed into the plastisol prior to application to a liner, or is applied in or unto the plastisol after application to a liner, for example by means of a scattering operation.
38. - Method according to any of numbered paragraphs 35 to 37, characterized in that said PVC powder is obtained by milling or grinding PVC scrap, preferably after said PVC scrap has been subjected to a solvent-based extraction, and/or with said PVC scrap being cooled, for example to a temperature below 10°C or below -20°C and/or by means of a cryogenic treatment for example with liquid nitrogen.
39.- Method according to any of numbered paragraphs 35 to 38, characterized in that said PVC powder is added to said plastisol in an amount of at least 1 percent by weight, and preferably less than 15 percent by weight, more preferably the content of said PVC powder is between 2 and 10% by weight of the plastisol.
40.- Method according to any of numbered paragraphs 35 to 39, characterized in that said liquid fraction forms at least 2 or at least 5 percent by weight of said plastisol 8, and preferably at most 30 percent by weight of said plastisol 8, or preferably, at least 50% by weight of the plasticizer content of the plastisol is obtained from said liquid fraction.
41.- Method according to any of numbered paragraphs 35 to 40, characterized in that said PVC powder and/or said liquid fraction is obtained by means of a method for recycling in accordance with any of numbered paragraphs 1 to 28, preferably at least an extraction by means of liquid CO₂ or supercritical CO₂ has been practiced therein, wherein preferably, said liquid fraction contains the entire liquid fraction obtained from solvent extraction of PVC scrap comprising at least cushion vinyl flooring products.
42.- Method according to any of numbered paragraphs 35 to 41, characterized in that, said recycling comprises:
   - providing industrial, post-industrial and/or post-consumer flexible PVC products, i.e. products comprising PVC and plasticizer, preferably at a rate of 5 phr or more, such as cushion vinyl flooring products or floor panels comprising soft PVC, such as LVT;
   - subjecting said PVC products to a solvent-based extraction, preferably at least using supercritical and/or liquid CO₂ to thereby extract from said PVC product a base liquid fraction 5 comprising at least said plasticizer; wherein said liquid fraction is, or is obtained from, said base liquid fraction; and
   - subjecting the thus extracted PVC products to a milling or grinding to thereby create a base PVC powder fraction 7; wherein said PVC powder is, or is obtained from, said base PVC powder fraction.
43.- Method according to numbered paragraph 42, characterized in that said base liquid fraction is formed for at least 75 wt%, or at least 90 wt% of plasticizers.
44.- Method according to any numbered paragraph 42 or 43, characterized in that said base PVC powder preferably has a particle size distribution with a D90 value of 500µm or less, or of 300 µm or less, or of 150µm or less, preferably the d10 value is larger than 10 µm, or larger than 35 µm.
45.- Sheet vinyl flooring product, preferably a cushion vinyl flooring product, comprising a, preferably foamed, PVC layer obtained from a plastisol, wherein at least 10 wt% of said PVC layer and/or of said sheet vinyl flooring product, is obtained from recycled material, preferably from material obtained by treating scrap of plasticized PVC.
46.- Sheet vinyl flooring product according to numbered paragraph 45, characterized in that it is obtained or obtainable using one or more of the methods of numbered paragraphs 1 to 44.
47.- Polyvinyl chloride (PVC) product comprising polyvinyl chloride (PVC) material and one or more components chosen from the group of plasticizers, heavy metals, polar components, acrylic resins, organic components, pigments, additives, or combinations thereof, and/or wherein said polyvinyl chloride (PVC) material is obtained by a method according to any of numbered paragraphs 1-28, and/or wherein said polyvinyl chloride (PVC) product is obtained by a method according to any of numbered paragraphs 29 to 31.
48.- Polyvinyl chloride (PVC) product according to numbered paragraph 47, wherein said one or more components have a concentration of below 1000 ppm, preferably of below 100 ppm.
49.- Floor or wall covering or floor or wall panel comprising a substrate and a top layer provided on said substrate, wherein said substrate comprises calcium carbonate, characterized in that at least a portion of said calcium carbonate is of a biological and/or a waste origin and/or is obtained by carbonatation of calcium oxide.
50.- Floor or wall covering or floor or wall panel according to numbered paragraph 1, characterized in that said calcium carbonate is at least obtained from egg shells, at least obtained from snail shells or seafood shells, at least obtained from paper waste, or at least obtained as waste minerals from the exploitation of shale gas.
51. - Method of manufacturing a floor or wall covering or a floor or wall panel, wherein said method at least comprises the following steps:
   - the step of providing calcium carbonate;
   - the step of providing a substrate material comprising said calcium carbonate;
   characterized in that said calcium carbonate is of a biological and/or a waste origin and/or is obtained by carbonatation of calcium oxide.
52.- Method according to numbered paragraph 51, characterized in that said calcium carbonate is at least obtained from egg shells, e.g. by grinding egg shells and removing the egg membrane.
53.- Method according to numbered paragraph 51 or 52, characterized in that said calcium carbonate is at least obtained by carbonatation of calciumoxide, e.g. by suspending said calcium oxide is suspended in water during the carbonatation process, and preferably functionalized.
54.- Method according to any of numbered paragraphs 51 to 53, characterized in that said method is applied for manufacturing decorative panels in accordance with numbered paragraph 49 or 50.
55.- Method according to any of numbered paragraphs 51 to 54, characterized in that said substrate is a filled synthetic material, wherein the filler material comprises said calcium carbonate, wherein said synthetic material is preferably a thermoplastic material chosen from the list consisting of polyvinyl chloride, polyethylene terephthalate, polypropylene, polyethylene and polyurethane.
56.- Method according to numbered paragraph 55, characterized in that at least 50 wt% of said filled synthetic material is said filler material.
57.- Floor or wall product comprising a substrate or substrate layer of filled polyvinyl chloride, wherein the amount of filler is at least 15wt%, at least 20wt% or at least 50 wt% of said substrate, characterized in that said filler consists at least for 50wt% out of calcium carbonate from a biological source, a waste source, and/or a carbonatation source where the carbon dioxide used for carbonation is recuperated, and in that said polyvinyl chloride consists at least for 50 wt% out of polyvinyl chloride obtained through a method for recycling polyvinyl chloride products in accordance with any of numbered paragraphs 1 to 34.
58.- Floor or wall product in accordance with numbered paragraph 57, characterized in that said floor or wall product is obtained through a method further showing the characteristics of any of numbered paragraphs 35 to 44.
59.- Floor or wall product in accordance with numbered paragraph 57 or 58, characterized in that said floor or wall product is a sheet vinyl flooring product or a flooring panel.
60.- Floor or wall product in accordance with any of numbered paragraphs 57 to 59, characterized in that said substrate or substrate layer comprises 0-5 phr of plasticizer, or wherein said substrate or substrate layer comprises more than 15 phr of plasticizer wherein said plasticizer is obtained for at least 50wt% from a base liquid fraction resulting from subjecting PVC products to a solvent-based extraction.

The aspects and concepts disclosed in the claims and/or numbered paragraphs may be combined with one another as long as they are not mutually contradictory. The present invention is by no means limited to the embodiments described above, however such methods or products may be realized according to various variants without departing from the scope of the present invention.

## Claims

1. - Method for recycling polyvinyl chloride (PVC) products, preferably polyvinyl chloride (PVC) floor or wall coverings, **characterized in that**, said method comprises the step (S1) of subjecting said polyvinyl chloride (PVC) products (1) to a solvent-based extraction.

2. - Method according to claim 1, **characterized in that**, said solvent-based extraction comprises extracting at least one component from the polyvinyl chloride (PVC) products, said component is chosen from the group of plasticizers, heavy metals, polar components, acrylic resins, organic components, pigments, additives, or combinations thereof.

3. - Method according to claim 2, **characterized in that**, said component is a plasticizer, preferably a phthalate-based plasticizer in accordance with formula I, wherein R and R' may be the same or may be different, and wherein R and/or R' are chosen from the group of CₙH₂ₙ₊₁, wherein n is an integer between 1 and 15, more preferably chosen from the group of diisononyl phthalate (DINP), di-(2-ethylhexyl) phthalate (DEHP), dibutyl phthalate (DBP), diisoheptyl phthalate (DIHP), di-n-octyl phthalate (DOP), diisooctyl phthalate (DIOP), diisodecyl phthalate (DIDP), or combinations thereof.

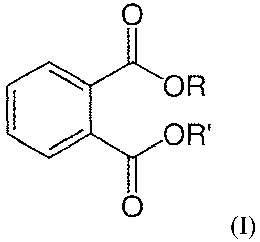

4. - Method according to any of the preceding claims, **characterized in that**, said solvent-based extraction comprises bringing said polyvinyl chloride product (1) into contact with at least one solvent, preferably at least one liquid solvent.

5. - Method according to any of the preceding claims, **characterized in that**, said solvent comprises supercritical carbon dioxide (CO₂).

6. - Method according to claim 5, **characterized in that**, said polyvinyl chloride product (1) is brought into contact with supercritical carbon dioxide (CO₂) at a temperature of between 20 and 100 °C, preferably of between 50 and 95 °C, more preferably of between 75 and 90 °C.

7. - Method according to claim 5 or 6, **characterized in that**, said polyvinyl chloride product is brought into contact with supercritical carbon dioxide (CO₂) at a pressure of between 20 and 50 MPa, preferably of between 30 and 50 MPa.

8. - Method according to any of the preceding claims, **characterized in that**, said solvent comprises an ionic liquid.

9. Method according to claim 8, **characterized in that**, said ionic liquid comprises one or more of 1-butyl-3-methyl imidazolium tetrafluoroborate ([BMIM][BF4]), 1-butyl-3-methyl imidazolium hexafluorophosphate ([BMIM][PF6]), 2,4-bis(2-hydroxypropyl)-1,1,3,3-tetramethyl guanidinium tetrafluoroborate ([TMGHPO2] [BF4]), and tetramethyl guanidine lactate (TMGL).

10. - Method according to claim 8 or 9, **characterized in that**, said ionic liquid is chosen from the group of 1-octyl-3-methyl imidazolium tetrafluoroborate ([C8mim][BF4]), 1-octyl-3-methyl imidazolium hexafluorophosphate ([C8mim][PF6]), triethylammonium hydrogen sulphate ([HNEt3][HSO4]).

11. - Method according to any of the preceding claims, **characterized in that**, said solvent-based extraction is a multi-step extraction comprising the steps:
(i) bringing said polyvinyl chloride product into contact with at least one ionic liquid; and
(ii) bringing said polyvinyl chloride product into contact with supercritical carbon dioxide (CO₂).

12. - Method according to any of the preceding claims, **characterized in that**, said method, prior to the step of subjecting said polyvinyl chloride (PVC) products to the solvent-based extraction, comprises the step of comminuting said polyvinyl chloride (PVC) products into granules, said granules having a particle size D90 of less than 2,5 mm, preferably of less than 1 mm, more preferably of less than 0,5 mm.

13. - Method according to any of the preceding claims, **characterized in that** said solvent comprises supercritical carbon dioxide and/or an ionic liquid, and a cosolvent.

14. - Method according to claim 13, **characterized in that** said cosolvent has affinity to phthalates and/or leads to a swelling of said PVC products.

15. - Method according to claim 13 or 14, **characterized in that** said cosolvent is chosen from the group consisting of water, methanol, ethyl acetate, methylene chloride, CHCl₃, acetone, cyclohexanone and tetrahydrofuran.
